# EUROPEAN PATENT APPLICATION

(11) **EP 4 556 796 A1**
(43) Date of publication of application: **21.05.2025**
(21) Application number: 23210342.4
(22) Date of filing: 16.11.2023
(51) Int. Cl.: F24C 15/02, G01K 11/12, F24C 3/12, F24C 7/08

(54) **OVEN DOOR ASSEMBLY COMPRISING AN OVEN TEMPERATURE INDICATOR**

(71) Applicant: B/E Aerospace, Inc., Winston-Salem, NC 27105 (US)
(72) Inventor: INOCENCIO, Maricar Roberto, 4232 Tanauan City (PH); BERMUDO, Jobelle Cantuba, 4232 Tanauan City (PH); AFRICA, Abegail Enriquez, 4232 Tanauan City (PH)
(74) Representative: Dehns

(57) **Abstract**

The present invention relates to an oven door assembly for an oven (1) comprising: an oven door (10) including a first side (12), a second side (14) and a thermally insulating layer (16) provided between the first side (12) and the second side (14); wherein the assembly is configured such that the first side (12) forms an internal surface of the oven door facing a temperature-controlled compartment of the oven in use; a thermally conductive plate (18) arranged on the first side (12) of the oven door (10); and a thermochromic element (22) arranged on the second side (14) of the oven door; wherein the thermally conductive plate (18) and the thermochromic element (22) are thermally connected by a thermally conductive bracket (20). The invention further extends to an oven (1) including the oven door (10) described herein, as well as a method for indicating an elevated temperature of an oven.

## Description

The present invention relates to an oven door assembly for an oven, more particularly for an oven designed for use in aircraft galleys, and more particularly, it pertains to a system for providing an indication of elevated temperature conditions within the oven.

Aircraft galleys are equipped with various appliances, including ovens, for heating and preparing in-flight meals. Due to their inherent function, the ovens used in these galleys generate substantial heat and often have external surfaces, such as the oven door, that can reach elevated temperatures.

Aircraft galleys are typically compact environments and there is a risk that a member of the aircraft crew or a passenger on board the aircraft may come into contact with these hot external surfaces. In addition, a member of the aircraft crew may deliberately contact the external surface as they may not be aware that the surface is hot. Even outside of the field of aircraft galleys, such as personal or commercial kitchens, environments can be crowded and compact resulting in a similar risk that someone may come into contact with the external surface of an oven door.

A typical approach to addressing this issue involves implementing heat-resistant materials and insulation in the oven's construction. Additionally, warning signs printed on the oven door may be used to alert nearby users. However, despite these efforts, there remains a potential risk of burn injuries when personnel come into contact with the heated oven door.

Existing methods for alerting personnel to the hot oven door, such as visual inspection or relying on thermal gloves, are not infallible. They may not always provide timely warnings or may require personnel to divert their attention from their primary tasks. These limitations can result in accidents and injuries, particularly in the fast-paced and often turbulent environment of an aircraft galley.

There is, therefore, a need for a more effective and immediate means of providing a clear indication when the oven door or its surrounding areas reach elevated temperatures, thereby enhancing the safety of onboard personnel.

Existing designs utilise text on the oven door which provides a warning that the oven "may" be hot, but this warning is typically present at all times, and so cabin crew would not be able to distinguish between a hot or cold oven. An improvement described in US 2020/0217725 uses thermochromic paint to form the warning text which becomes illuminated at higher temperatures, thus making it clearer to members of the cabin crew. However, a problem associated with this is that there can be a significant delay between the internal cavity of the oven reaching an elevated temperature and the thermochromic paint reaching the required temperature to illuminate.

There is therefore a need to provide a more effective and immediate indication of when an oven door, and the internal cavity have reached elevated temperatures.

Viewed from a first aspect, there is provided an oven door assembly for an oven comprising: an oven door including a first side, a second side and a thermally insulating layer provided between the first side and the second side; wherein the assembly is configured such that the first side forms an internal surface of the oven door facing a temperature-controlled compartment of the oven in use; an thermally conductive plate arranged on the first side of the oven door; and a thermochromic element arranged on the second side of the oven door; wherein the thermally conductive plate and the thermochromic element are thermally connected by a thermally conductive bracket.

The thermally conductive bracket may extend from the thermally conductive plate to the thermochromic element through the thermally insulating layer.

At least a portion of the thermally conductive bracket may extend to the second side, wherein said portion may house the thermochromic element.

The assembly may be configured such that the second side forms an external surface of the oven door in use.

The thermochromic element may comprise a thermochromic plastic material.

The thermochromic element may be configured to transition between a first state and a second state as a temperature of the thermochromic element exceeds a threshold temperature.

The first state may comprise a first colour and the second state may comprise a second colour.

The threshold temperature may be between 40 to 80 degrees Celsius.

The thermochromic element may be provided with a design on its surface.

The design may be a company logo.

Viewed from a second aspect, there is provided an oven comprising: a temperature regulation system; a temperature-controlled compartment, wherein the temperature regulation system is configured to control the temperature within the temperature-controlled compartment; and the oven door assembly of any preceding claim, wherein the thermally conductive plate is exposed to the temperature-controlled compartment.

The oven may be configured for installation in an aircraft galley.

The second surface may form an external surface of the oven.

The first surface may form an internal surface of the oven door facing the temperature-controlled compartment of the oven.

Certain embodiments of the invention will now be described, by way of example only, with reference to the accompanying drawings, in which:
Figure 1 depicts a side view of an oven;
Figure 2 depicts a plan view of an oven;
Figure 3a depicts a front view of an oven; and
Figure 3b depicts a front view of an oven.

Viewed from a first aspect, there is provided an oven door assembly for an oven comprising: an oven door including a first side, a second side and a thermally insulating layer provided between the first side and the second side; wherein the assembly is configured such that the first side forms an internal surface of the oven door facing a temperature-controlled compartment of the oven in use; an thermally conductive plate arranged on the first side of the oven door; and a thermochromic element arranged on the second side of the oven door; wherein the thermally conductive plate and the thermochromic element are thermally connected by a thermally conductive bracket.

It will be appreciated that the properties of the thermochromic element may rely on the properties of thermochromism whereby the element can change appearance in some way in response to a change in the temperature of the material forming the element. In other words, the thermochromic element may be configured to transition between a first state and a second state as a temperature of the thermochromic element exceeds a threshold temperature.

The above arrangement reduces the time taken for the thermochromic element to reach the temperature necessary for it to provide an indication that the oven is active and hot. This is achieved through the use of a thermally conductive plate arranged on the side of the oven door, i.e. the side adjacent to the temperature-controlled compartment of the oven, and a thermally conductive bracket connecting the thermally conductive plate to the thermochromic element on the second side of the door.

The present invention therefore offers a real-time and easily perceivable indication to cabin crew members when the oven door reaches an elevated temperature, thereby reducing the risk of burn injuries and enhancing safety during in-flight operations. Moreover, the invention is designed to be cost-effective and reliable given that no additional electronic equipment or digital displays are necessary. The system would therefore require limited maintenance, and may also be compatible with existing oven configurations.

The thermally conductive bracket may extend between the thermally conductive plate and the thermochromic element in any manner. For example, it may extend along the surface of the first side of the oven door to a top or bottom surface of the oven door, and may then extend along the second side of the oven door to the thermochromic element. However, in a preferred arrangement, the thermally conductive bracket may extend from the thermally conductive plate to the thermochromic element through the thermally insulating layer.

This arrangement may provide the shortest path between the thermally conductive plate and the thermochromic element to thereby reduce the weight and complexity of the system. In this regard, an aperture may be provided through the thermally insulating layer between the first and second side of the oven door. The thermally conductive bracket may then be arranged to extend through said aperture.

It will be appreciated that the term "thermally connected" in relation to the present aspect of the invention implies that the heat of the thermally conductive plate may be transferred or conducted to the thermochromic element.

The thermally insulating layer may comprise any medium capable of providing thermal insulation. For example, the thermally insulating layer may comprise air, or may comprise a heat resistant plastic material. Alternatively, the thermally insulating layer may comprise insulating wool or fiberglass.

The thermally conductive bracket may be in direct contact with both the thermally conductive plate and the thermochromic element. The thermally conductive bracket may comprise a single piece which extends between the thermally conductive plate and the thermochromic element, or it may comprise a plurality of segments connected together. In particular, the thermally conductive bracket may comprise a first segment arranged in contact with the thermally conductive plate, which may extend into the thermally insulating layer. The thermally conductive bracket may then further comprise a second segment arranged in contact with the first segment and the thermochromic element.

A portion of the thermally conductive bracket may be flush with the second side of the oven door. In this instance, the thermochromic element may be positioned in contact with the portion of the thermally conductive bracket that is flush with the second side. In particular, the thermochromic element may be fastened to said portion using any fastening means.

Alternatively, a portion of the thermally conductive bracket may protrude from the second side of the oven door. In this instance, the thermochromic element may entirely cover the portion of the thermally conductive bracket which protrudes from the second side. In particular, the thermochromic element may comprise a recessed portion such that it may extend around all sides of the portion of the thermally conductive bracket.

The thermally conductive bracket may comprise a recess. The recess may be provided for both alternatives discussed above where a portion of the thermally conductive bracket may be flush with the second side, or where a portion of the thermally conductive bracket may protrude from the second side.

The recess may be sized to house the thermochromic element such that the thermochromic element may be flush with the thermally conductive bracket. Alternatively, the recess may be sized to house the thermochromic element such that a portion of the thermochromic element extends beyond the recess of the thermally conductive bracket in a direction away form the second side of the oven door.

Accordingly, in each case, at least a portion of the thermally conductive bracket may extend to the second side, wherein said portion may house the thermochromic element.

The arrangement whereby the thermally conductive bracket comprise a recess arranged to house the thermochromic element may increase the contact surface area between the thermally conductive bracket and the thermochromic element thereby increasing heat transfer between the two components. This can result in further reducing the time taken to indicate the elevated temperature within the oven.

The thermally conductive plate provided on the first side of the oven door may be integrated with the oven door. In one option, the thermally conductive plate may form the first side of the oven door, in particular, when assembled the thermally conductive plate may form the inner surface of the oven door in use. However, it will be appreciated that the thermally conductive plate may be integrated within the oven door such that it forms a portion of the first side of the oven door.

In another arrangement, the thermally conductive plate may comprise a separate element which may be fixed to the first side of the oven door. The thermally conductive plate may be fixed to the first side of the oven door by any fixing means, such by adhesive or soldering. It will be appreciated that any fixing means used would be required to withstand temperatures typically expected in the given oven.

The thermally conductive plate may be embedded within the first side of the oven door. In other words, the thermally conductive plate may be flush with the first side of the oven door. In case where the present invention is applied to existing ovens, the thermally conductive plate may simply be fixed to the first side of the oven door.

In operation, the thermally conductive plate may be exposed directly to the internal temperature of the temperature-controlled compartment of the oven. Therefore, as the temperature within the temperature-controlled compartment increases, the temperature of the thermally conductive plate may increase at a rate corresponding to the thermal conductivity of the thermally conductive plate. The elevated temperature of the thermally conductive plate may then transfer to the thermochromic element via the thermally conductive bracket at a rate corresponding with the thermal conductivity of the bracket and element accordingly.

The thermally conductive plate and the thermally conductive bracket may comprise any thermally conductive material, such as metallic materials. For example, each of the thermally conductive plate and thermally conductive bracket may comprise one or more of copper, aluminium, tungsten, zinc, or steel.

As stated above, the thermochromic element may be configured to transition between a first state and a second state as a temperature of the thermochromic element exceeds a threshold temperature. The heat of the inner thermally conductive bracket is transferred to the thermochromic element via the thermally conductive bracket. Accordingly, the above statement may be interpreted such that the thermochromic element may be configured to transition between a first state and a second state as a temperature of the thermally conductive plate exceeds a second threshold temperature, whereby the threshold temperature for the thermochromic element discussed above may be termed the first threshold temperature.

In view of the typical latency between the temperature of the thermally conductive plate increasing and the temperature of the thermochromic element increases, which may be determined by the respective thermal conductivities, the first threshold temperature may be less than the second threshold temperature. Alternatively, the first and second threshold temperature may be the same.

The first threshold temperature may be between 40 to 80 degrees Celsius. Optionally, the first threshold temperature may be between 40 to 70, 40 to 60 or 40 to 50 degrees Celsius. Consequently, the second threshold temperature may be between 40 and 100 degrees Celsius, which may be dependent on the thermal conductivity of both the thermally conductive plate and the thermally conductive bracket.

The transition between the first state and the second state may be any suitable change to provide an indication to nearby personnel. In particular, the first state of the thermochromic element may comprise a first colour, and the second state of the thermochromic element may comprise a second colour. The first and second colour may depend on the material used to form the thermochromic element. As an example, the first colour may be silver and the second colour may be red. This of particular benefit as it can serve as an indication of the oven door surface reaching a higher temperature due to the implicit connotations of the colour red in relation to temperature, although it will be appreciated that this particular colour is merely one option, and any change in colour would be applicable.

The thermochromic element may be configured such that it transitions from the second state to the first state when the temperature of the thermochromic element falls below the threshold temperature. This allows the system to be reversible.

The thermochromic element may comprise a thermochromic plastic material. More specifically, the thermochromic element may comprise a food-grade thermochromic plastic.

In view of the transition of the thermochromic element between a first colour and second colour, the thermochromic element may be provided with a design on its surface. For example, the design may comprise a company logo or text. As the thermochromic element transitions to the second colour, this arrangement can have the added benefit of promoting the design with increased visibility.

The thermochromic element may be provided on any part of the second side of the oven door that would be visible to nearby personnel.

The oven door may be for an oven which is configured for installation on an aircraft galley.

Although the discussion above has been in relation to the oven door assembly, it will be appreciated that the present invention may extend to an oven comprising the oven door discussed above. In particular, when viewed from a second aspect, there is provided an oven comprising: a temperature regulation system; a temperature-controlled compartment, wherein the temperature regulation system is configured to control the temperature within the temperature-controlled compartment; and the oven door assembly described in the first aspect above, wherein the thermally conductive plate is exposed to the temperature-controlled compartment.

The oven door assembly herein may comprise any of the features or limitations discussed in relation to the first aspect above.

For instance, the thermally conductive plate may be arranged so that it is directly exposed to the temperature-controlled compartment of the oven. Therefore, as the temperature-controlled compartment is heated during use, said heat can transfer directly to the thermally conductive plate and, in turn, the thermochromic element via the thermally conductive plate.

The second surface may form an external surface of the oven.

The oven may be configured for installation in an aircraft galley. In other words, the oven may be an aircraft galley oven.

In this regard, viewed from a third aspect, there is provided an aircraft galley comprising one or more ovens as described in the third aspect above.

The aircraft galley may comprise a plurality of ovens.

The ovens described in the present third aspect may comprise any of the features described in relation to the first and second aspect above.

Viewed from a fourth aspect, there is provided a method of indicating an elevated temperature of an oven comprising: providing a thermally conductive plate on a first side of an oven door, wherein the first side is arranged to face a temperature-controlled compartment of the oven in use, providing a thermochromic element on a second side of the oven door; and connecting the thermally conductive plate and the thermochromic element using a thermally conductive bracket.

The method may comprise the use of any of the features described in relation to the first, second and third aspects above.

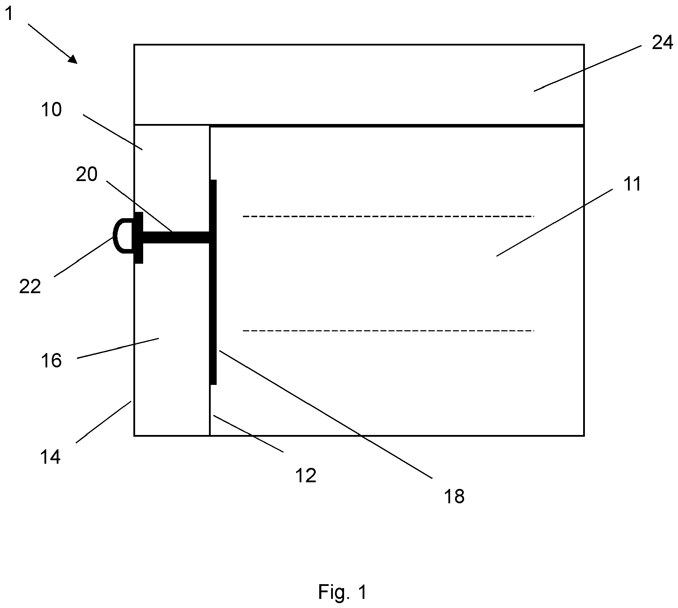

Figure 1 shows a side view of an oven 1 comprising a system for indicating that a temperature-controlled compartment 11 has reached an elevated temperature, to thereby provide a warning to nearby personnel. The oven 1 is configured for use within an aircraft galley, but the principles may be applicable to any type of oven 1.

Each of Figures 1, 2 and 3 depict the same arrangement, but from a different perspective. Reference will therefore be made to all three Figures.

The oven 1 comprises an oven door 10, a temperature-controlled compartment 11, and a control system 24. The control system 24 comprises all the necessary components for setting and controlling the temperature within the temperature-controlled compartment 11, such as a heating element and/or a fan. It will be appreciated that the Figures provided are for schematic purposes only, and the precise location of the various components may differ in practice.

The oven door 10 comprises a first side 12, a second side 14 and a thermally insulating layer 16 provided between the first side 12 and the second side 14. The thermally insulating layer 16 in the present example comprises air, but it may consist of any thermally insulating layer such as fiberglass or wool.

During operation, as the temperature of the temperature-controlled compartment 11 increases, the surface on the second side 14 will subsequently increase, albeit at a slower rate in view of the insulating layer 16. An aircraft galley is typically a compact and busy environment, and personnel may come into contact with the second side 14 of the oven door 10 accidentally without realising that it is hot. This can result in injuries such as burns.

The oven 1 is therefore provided with a thermally conductive plate 18 arranged on the first side 12 of the oven door 10, and a thermochromic element 22 arranged on the second side 14 of the oven door 10. The thermally conductive plate 18 and the thermochromic element 22 are then connected together by a thermally conductive bracket 20 which extends through the insulating layer.

The thermally conductive plate 18 and the thermally conductive bracket 20 can be formed of any suitable material capable of heat conduction. For example, they may be formed of copper, aluminium, tungsten, zinc, or steel. Meanwhile, the thermochromic element 22 is formed of a thermochromic plastic material which is configured to transition between a first state and a second state once it reaches a threshold temperature.

A portion of thermally conductive bracket 20 extends to the second side 14 of the oven door, and sits flush with the oven door 10. The bracket 20 can be further provided with a recess (not shown) in which the thermochromic element 22 can be located.

The oven 1 is configured to installation on an aircraft galley, and may therefore be one of a plurality of ovens 1 within the aircraft galley.

The thermally conductive plate 18 is directly exposed to the temperature-controlled compartment 11. Therefore, as the temperature of the temperature-controlled compartment 11 increases, the temperature of the thermally conductive plate 18 increases at a rate corresponding to the thermal conductivity of the thermally conductive plate 18. Subsequently, heat is transferred from the thermally conductive plate 18 to the thermochromic element 22 via the thermally conductive bracket 20.

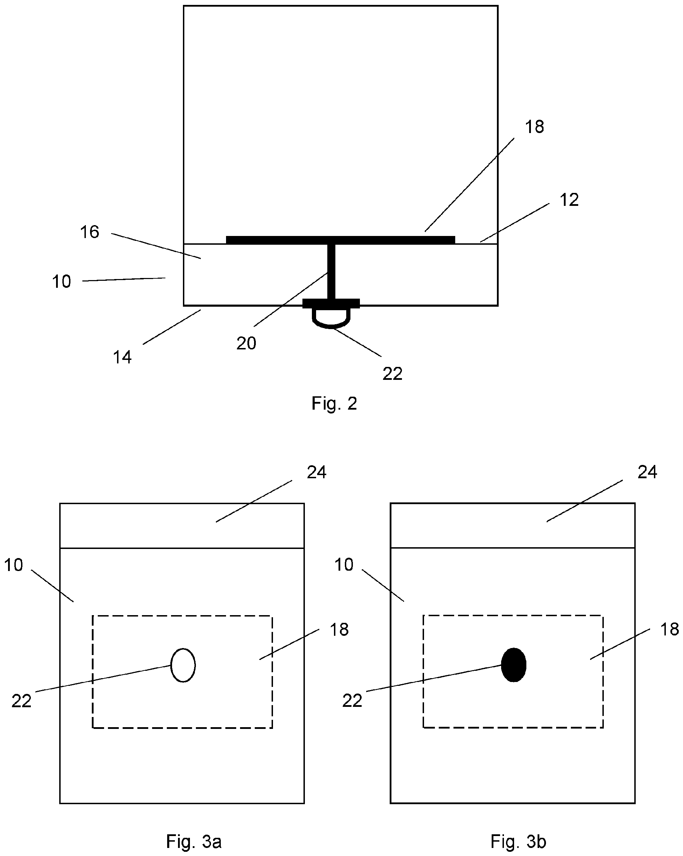

Once the temperature of the thermochromic element 22 exceeds the threshold temperature, it transitions from a first state to a second state. In the first state, the thermochromic element 22 is a first colour such as silver, and in the second state, the thermochromic element 22 is a second colour such as red. A front view of the oven showing the second side 14 of the oven door is provided in Figures 3a and 3b. In particular, in Figure 3a, the thermochromic element 22 is in a first state, thereby indicating that the oven 1 is not currently at an elevated temperature. In Figure 3b, the thermochromic element 22 is in a second state thereby indicating that the oven 1 is at an elevated temperature and that the oven door 10 may be too hot to touch.

The threshold temperature is in the region of 40 to 80 degrees Celsius.

This transition to red provides a clear warning to nearby personnel that the oven is at an elevated temperature, and that the surface of the oven door is hot. This can therefore prevent personnel from accidentally contacting the oven door without knowing that it may be hot.

Once the temperature of the thermochromic element 22 falls back below the threshold temperature, the thermochromic element transitions from the second state to the first state again.

The thermochromic element 22 comprises a design in the form of a company logo. This may the logo of the aircraft operator, or the oven manufacturer. When in the second state, the thermochromic element provides increased visibility of the design and therefore improves the recognition for nearby people.

## Claims

1. An oven door assembly for an oven comprising:
an oven door including a first side, a second side and a thermally insulating layer provided between the first side and the second side; wherein the assembly is configured such that the first side forms an internal surface of the oven door facing a temperature-controlled compartment of the oven in use;
a thermally conductive plate arranged on the first side of the oven door; and
a thermochromic element arranged on the second side of the oven door;
wherein the thermally conductive plate and the thermochromic element are thermally connected by a thermally conductive bracket.

2. The oven door assembly of claim 1, wherein the thermally conductive bracket extends from the thermally conductive plate to the thermochromic element through the thermally insulating layer.

3. The oven door assembly of claim 1 or 2, wherein at least a portion of the thermally conductive bracket extends to the second side, wherein said portion houses the thermochromic element.

4. The oven door assembly of any preceding claim, wherein the assembly is configured such that the second side forms an external surface of the oven door in use.

5. The oven door assembly of any preceding claim, wherein the thermochromic element comprises a thermochromic plastic material.

6. The oven door assembly of any preceding claim, wherein the thermochromic element is configured to transition between a first state and a second state as a temperature of the thermochromic element exceeds a threshold temperature.

7. The oven door assembly of claim 6, wherein the first state comprises a first colour and the second state comprise a second colour.

8. The oven door assembly of claim 6 or 7, wherein the threshold temperature is between 40 to 80 degrees Celsius.

9. The oven door assembly of any preceding claim, wherein the thermochromic element is provided with a design on its surface.

10. The oven door assembly of claim 9, wherein the design is a company logo.

11. An oven comprising:
a temperature regulation system;
a temperature-controlled compartment, wherein the temperature regulation system is configured to control the temperature within the temperature-controlled compartment; and
the oven door assembly of any preceding claim, wherein the thermally conductive plate is exposed to the temperature-controlled compartment.

12. The oven of claim 11, wherein the oven is configured for installation in an aircraft galley.

13. The oven of claim 11 or 12, wherein the second surface forms an external surface of the oven.

14. The oven of any of claims 11 to 13, wherein the first surface forms an internal surface of the oven door facing the temperature-controlled compartment of the oven.

15. A method of indicating an elevated temperature of an oven comprising:
providing a thermally conductive plate on a first side of an oven door, wherein the first side is arranged to face a temperature-controlled compartment of the oven in use,
providing a thermochromic element on a second side of the oven door; and
connecting the thermally conductive plate and the thermochromic element using a thermally conductive bracket.
